# EUROPEAN PATENT APPLICATION

(11) **EP 3 089 087 A1**
(43) Date of publication of application: **02.11.2016**
(21) Application number: 16167181.3
(22) Date of filing: 27.04.2016
(51) Int. Cl.: G06Q 10/06

(54) **ARRANGEMENT AND METHOD FOR IMPROVING SALES PERFORMANCE**

(30) Priority: 27.04.2015 US 201562153096 P
(71) Applicant: Bizmind Oy, 00330 Helsinki (FI)
(72) Inventor: Pyykkö, Manne, 00330 Helsinki (FI); Huttunen, Teemu, 00330 Helsinki (FI)
(74) Representative: IPR Partners Ltd

(57) **Abstract**

An electronic arrangement for determining at least one implementable sales action for a user. The arrangement includes at least one electronic device, which includes a processing entity and a memory entity for processing and storing data, respectively, the processing entity being configured to at least: obtain user profile data, in accordance with user input or from the memory entity, obtain sales goal data, in accordance with user input or from the memory entity, obtain sales goal success data in accordance with user input, obtain user profile associated self-assessment data in accordance with user input, compare the sales goal and the sales goal success data, and determine the result of the comparison, identify self-assessment characteristics associated with the result of the comparison, and store the data as performance data, in accordance with a predetermined decision logic, determine implementable actions in accordance with a sales goal and optionally stored performance data. Corresponding method and computer program product are also presented.

## Description

### FIELD OF THE INVENTION

Generally the present invention relates to electronic arrangements and computing systems. Particularly, however not exclusively, the invention pertains to an arrangement and corresponding method for improving a sales person's performance by collecting user input sales performance data, determining improvement possibilities and providing the sales person with according implementable actions.

### BACKGROUND

Selling is a crucially important operation for any company or individual. Improving sales performance has for long been an interesting but difficult subject to take on. However, determining improvement opportunities and even estimating sales performance may be done in accordance with various different indicators. Some traditional metrics used to track sales performance include measuring the amount of leads, calls, clients and their type as well as revenue.

However, such metrics alone lead to misleading conclusions about what needs to be done or how the performance may be improved.

The performance of sales operations is a sum of many individual sales situations meeting and etc. and as such it is highly dependent on the people contributing and in charge of doing the hands-on selling. The problem however is that the current sales performance metrics and systems do not implicate or lead into any kind of development for the sales people individuals.

Sales performance monitoring and measuring systems such as customer relationship management (CRM) and other such systems track mostly quantitatively sales performance data in general with key performance indicators (KPIs) and such. Customers and salespeople are often listed there with generic task allocation, plans and running projects. In the same manner, suggestions and goals may be set as quantitative goals such as revenue, the amount of customers and such aims. Obviously these systems aren't designed for customizability or improving the performance of individual sales people.

Individual salespeople so use manual means such as notes etc. to keep track of their notions and actions, such as to-do lists and what some of their customers need. These salespeople learn most of their skills on the job - a lot of which learnings a lot is tacit and overt. Their ideas and possible individual development is hardly ever monitored or their tacit knowledge assessed and saved.

At the same time, companies aim to develop the competence of their sales people but as the amount of sales people and clientele, as well as the amount of different types of clientele, increases the teaching becomes more difficult and hardly anyone is left with coaching or advising that is targeted for them and so really benefits them.

Learning to perform better may not be simply deducted from quantitative data such as the amount of closed deals. Conversely, poor performance may not be always deducted back to its reasons which might lead to failure to teach the right things in the right way especially if no personalized and competent coach is used. However, using competent coaches constantly together to advise individually an armada of salespeople isn't efficient and practically often even possible. Advising and teaching is a long and individual-centered process which requires both competency in the taught skill as well as pedagogical capability and time to learn from and teach a person so that the person's characteristics are taken into account.

There is hence obviously a need in the state of the art to offer better systems for monitoring and improving individual sales performance efficiently systematically and with concrete goals and advising.

### SUMMARY OF THE INVENTION

The objective of the embodiments of the present invention is to at least alleviate one or more of the aforementioned drawbacks evident in the prior art arrangements particularly in the context of arrangements for collecting, analyzing and provisioning sales performance data. The objective is generally achieved with an arrangement and a corresponding method in accordance with the present invention that determines a user's sales profile, sales goal and sales performance in accordance with user input and provides the user with concrete implementable actions for improving sales performance.

The solution aims to provide users, such as various different sales people, individualized and concrete goal-oriented suggestions on how to improve their actions in relation to any context-specific situations, such as sales pitches, meetings and telecommunications conversations. Indeed, the solution has various different applications that benefit from improving a sales person's skills in general and offering them advice in relation to the sales situation or sales target, such as a customer, buyer, etc.

Further, the current solution's strength is advantageously in that it is capable to tap into tacit information, such as a user's sales profile type. Such tacit information is often hidden and rarely explicit but it contains subjective notions and nuances that are crucial for identifying and improving a seller's skills. Current solution allows for identifying these factors, and hence quantifying and measuring the user's performance in relation to these factors. Further, this enables comparison of the data and creating suggestion of concrete actions for a user to implement.

The current solution may be advantageously implemented via an electronic device such as a mobile device optionally as part of a bigger system. The solution may hence be implemented by users on their mobile devices, which may act as standalone, or incorporate and use the data gathered from other sources. This allows for learning and high degree of provision between the arrangement entities, which consequently leads to more accurate performance tracking and advising for individual users.

The solution hence allows for large-scale implementation. The solution may use only a user's input together with a set of predetermined rules to provide for suggestions and performance data to the user. On the other hand, the arrangement may also gather data from many users and use it for provision and especially for developing the arrangement and the output suggestions to the users. Further, on such larger scale e.g. management may be able to monitor the performance and development of their salespeople.

Finally, perhaps the most advantageous feature of the present invention is that it learns from the user data and improves the suggested implementable actions accordingly. Further, the solution is essentially agnostic of the user meaning no preprogramming, user optimization or user recognition is needed because the arrangement is capable of learning as the user uses it. Anybody can hence use the solution and receive implementable actions and advice in relation to their identified individual sales performance.

In accordance with one aspect of the present invention an electronic arrangement for determining at least one implementable sales action for a user comprising:
- at least one electronic device comprising a processing entity and a memory entity or an access to a memory entity for processing and storing data, respectively, said processing entity being configured to at least:
   - obtain user profile data, in accordance with user input or from the memory entity,
   - obtain sales goal data, in accordance with user input or from the memory entity,
   - obtain sales goal success data in accordance with user input,
   - obtain user profile associated self-assessment data in accordance with user input,
   - compare the sales goal and the sales goal success data, and determine the result of the comparison,
   - identify self-assessment characteristics associated with the result of the comparison, and store the data as performance data,
   - in accordance with a predetermined decision logic, determine implementable actions in accordance with a sales goal and to the stored performance data.

According to an exemplary embodiment the implementable sales action may be any action to be implemented in a sales event, such as a behavior, manner and amount of speech, role, etc. or concrete action when discussing or negotiating with a set sales target. The implementable sales action needn't be actually a "sales action" but is referred to as one for the sake of clarity and the context-specificity of the action (the actions are determined in relation to the context and pertain to actions that the user can do or take to achieve better results in behavior, interaction and negotiating - particularly in a sales setting/environment).

According to an exemplary embodiment of the present invention the comparison data is collected, provided and used in the comparison together with the sales target and/or performance data.

According to an exemplary embodiment of the present invention the electronic arrangement may comprise obtaining sales target profile data, in accordance with user input or from the memory entity. Such data may be for example a user profile or some characteristics of the buyer or customer of the sales situation.

According to an exemplary embodiment of the present invention the electronic arrangement may also comprise at least one remote entity, optionally a remote server or a cloud computing system, comprising at least a database for storing data from the electronic devices and the decision logic data. The database may be used to collect and store the sales data made by the electronic devices. Further, the remote entity may be used to provide any collected data with the electronic devices.

According to an exemplary embodiment of the present invention the electronic device of the electronic arrangement may comprise connection means for transmitting data towards and/or receiving data from a remote entity. Such data may comprise code, commands or control parameters.

According to an exemplary embodiment of the present invention the comparison data is collected and provided for use as graphical representation.

According to an exemplary embodiment of the present invention the electronic device may be arranged to collect and aggregate performance data to be used in the comparison and/or for determining implementable actions.

According to an exemplary embodiment of the present invention the decision logic may be provided in and from the remote entity, such as a web program or SaaS for the electronic device.

According to an exemplary embodiment of the present invention the electronic arrangement may utilize 'big data' techniques may be used for obtaining, aggregating, processing and/or provisioning the data gathered from the electronic devices and other sources.

According to an exemplary embodiment of the present invention the electronic arrangement may be arranged to process and create graphical representations in accordance with i.a. the comparison data or collected user profile, sales target and sales goal data. The comparison data may be also collected, provided and used in the comparison together with the sales goal and/or stored performance data.

According to an exemplary embodiment of the present invention the user input may be engendered via graphical indications of a graphical user interface, such as sliders, scorings, checkboxes, tickboxes, numeric, alphabetic or alphanumeric representations etc.

According to an exemplary embodiment of the present invention the electronic device preferably constitutes an (end-) user device, such as a mobile device, (tablet, phablet, mobile phone, smartphone, etc.) or a terminal device, such as a laptop or desktop computer. However, the electronic device itself may also constitute or at least partially utilize a server or a cloud system.

According to an exemplary embodiment of the present invention the electronic arrangement for determining at least one implementable sales action for a user comprises:
- at least one electronic device comprising a graphical user interface, a processing entity and a memory entity for processing and storing data, respectively, said processing entity being configured to capture user input via said graphical user interface, the processing entity further being configured to at least:
   - obtain user profile data, in accordance with user input engendered via first presented graphical indications, or from the memory entity,
   - obtain sales goal data, in accordance with user input engendered via second presented graphical indications, or from the memory entity,
   - obtain sales goal success data in accordance with user input engendered via third presented graphical indications,
   - obtain user profile associated self-assessment data in accordance with user input engendered via fourth presented graphical indications,
   - compare the sales goal and the sales goal success data, and determine the result of the comparison,
   - identify self-assessment characteristics associated with the result of the comparison, and store such data as aggregated performance data,
   - in accordance with a predetermined decision logic, determine implementable actions in accordance with a sales goal and aggregated performance data,
   - produce a representation of implementable actions.

According to an exemplary embodiment of the present invention the representation of implementable actions may comprise text, metrics, graphs, numerical symbols, scores, such as on a scale, etc.

In accordance with one aspect of the present invention a method for determining implementable sales actions for a user comprising:
- obtaining user profile characteristics data and determining a user profile,
- obtaining sales target profile characteristics data and determining a sales target profile,
- obtaining sales goal data,
- comparing the obtained data components according to a predetermined decision logic, and
- determining and providing a user with implementable actions according to said comparison.

According to an exemplary embodiment of the present invention the method of the present invention may also comprise the method item of obtaining sales goal success data.

According to an exemplary embodiment of the present invention the method may also comprise the method item of obtaining the user's self-assessment data of a sales event.

According to an exemplary embodiment of the present invention the method may also comprise the method item of determining and providing a user with implementable actions according to said comparison, goal success data and user's self-assessment data of a sales event.

According to an exemplary embodiment of the present invention the method may also comprise the method item of obtaining and aggregating at least one other information component from the group consisting of sales records, historical comparison data, goal success data and user's self-assessment data.

According to an exemplary embodiment of the present invention the method may also comprise the method item of determining and providing a user with implementable actions according to said comparison, goal success data and/or user's self-assessment data of a sales event.

In accordance with one aspect of the present invention a computer program product embodied in a non-transitory computer readable carrier or distribution medium, comprising computer code that, when run on a computer, cause the computer to execute the method items of:
- obtaining user profile characteristics data and determining a user profile,
- obtaining sales target profile characteristics data and determining a sales target profile,
- obtaining sales goal data,
- comparing the obtained data components according to a predetermined decision logic, and
- determining and providing a user with implementable actions according to said comparison.

According to an exemplary embodiment of the present invention the computer program product embodied in a non-transitory computer readable medium, comprising computer code for causing the computer to execute the method of the present invention may be provided as a web program or Software as a Service (SaaS) as part of the system of the present invention.

The previously presented considerations concerning the various embodiments of the electronic device may be flexibly applied to the embodiments of the method and of the computer program product mutatis mutandis and vice versa, as being appreciated by a skilled person. Similarly, the provision and utilization of the method as well as the electronic arrangement are scalable in the limitations of the entities according to the arrangement.

As briefly reviewed hereinbefore, the utility of the different aspects of the present invention arises from a plurality of issues depending on each particular embodiment.

The expression "a number of" may herein refer to any positive integer starting from one (1). The expression "a plurality of" may refer to any positive integer starting from two (2), respectively.

The expressions "sales event" and "sales situation" are used herein practically interchangeably and refer to the situation wherein the user (sales person) and the customer, buyer, or such, connect in a business sense. Some examples of these comprise sales pitches, meetings and telecommunications conversations.

The term "sales target" is herein used to refer to the other party, such as a buyer or customer, in a sales situation.

The term "exemplary" refers herein to an example or example-like feature, not the sole or only preferable option.

The term "arrangement" may be used interchangeably with the term system and is often used to refer to a computer or a computer network implemented solution.

Different embodiments of the present invention are also disclosed in the attached dependent claims.

### BRIEF DESCRIPTION OF THE RELATED DRAWINGS

Next, some exemplary embodiments of the present invention are reviewed more closely with reference to the attached drawings, wherein
Fig. 1 illustrates an embodiment of the arrangement in accordance with the present invention.
Figures 2a and 2b illustrate in a conceptual manner user profile aspects and user profile creation in accordance with the present invention.
Fig. 3 illustrates in a conceptual manner an exemplary user interface implementation for obtaining sales goal data in accordance with the present invention.
Fig. 4 illustrates in a conceptual manner an exemplary user interface implementation for collecting self-assessment data in accordance with the present invention.
Figs. 5a,5b and 5c illustrate presentations of implementable actions and graphical representations of user performance via an interface mockup setting.
Fig. 6 is a flow diagram illustrating an embodiment of a method in accordance with the present invention.

### DETAILED DESCRIPTION OF THE EMBODIMENTS

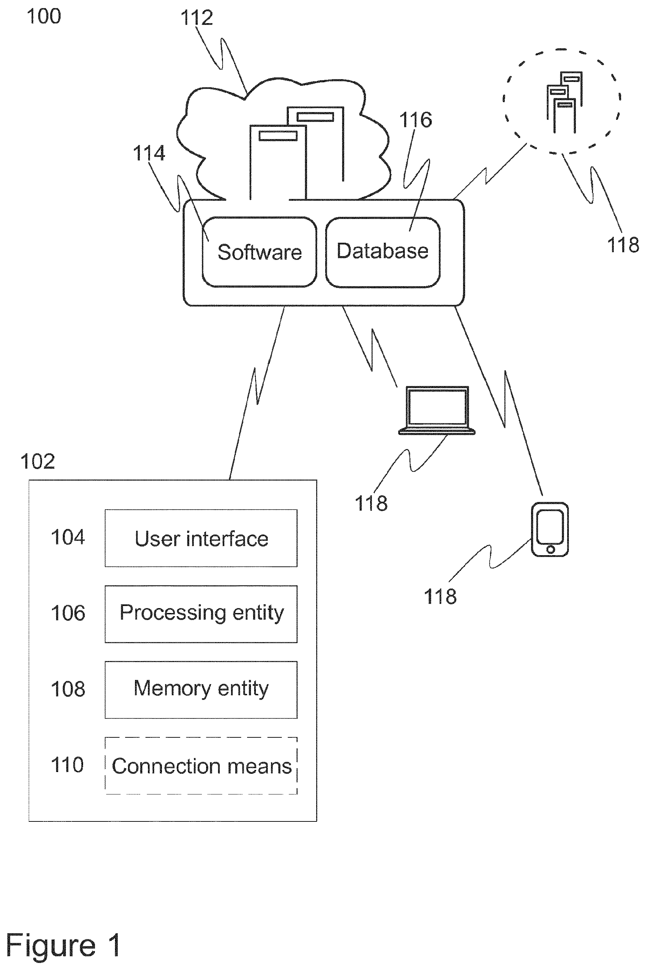

Figure 1 illustrates an embodiment of the arrangement 100 in accordance with the present invention.

The electronic arrangement 100 comprises the at least one electronic device 102 comprising a user interface 104, processing entity 106, memory entity 108 and optionally a connection means 110. The electronic arrangement 100 may further comprise a remote entity 112 such as a cloud computing or remote server, comprising a computer program product 114 and a database 116. The arrangement 100 may further comprise terminal, mobile and server devices 118. Additional elements and means known to a person skilled in the art may be incorporated appropriately according to various embodiments.

User interface 104 may constitute a display screen or a touch screen such as an essentially touch-based, contactless and/or three-dimensional touch screen via which a user may give input to the device 100 preferably via a GUI (graphical user interface). Some exemplary feasible touch screens comprise camera-based, capacitive, infrared, optical, resistive, strain gauge and surface acoustic wave touch screens.

The user interface may be capable of detecting input such as static touches (e.g. pointing) and/or continuous movement (e.g. swiping) essentially upon and/or on a surface. Optionally the user interface may be capable of detecting three-dimensional input such as movement inside a predetermined space optionally above and/or in reference to the user interface. Optionally the user interface may be capable of detecting user input essentially on and/or upon a surface, such as touch-based user input, and over a surface, such as three-dimensional user input.

The user interface 104 further preferably provides a GUI that is essentially device-dependent. The graphical user interface may be used to give commands and control the software program. The graphical user interface may be configured to visualize, or present as textual, different data elements, indications, status information, control features, user instructions, user input indicators, etc. to the user via for example a touch screen. Additionally, the user interface 104 may be used to control the arrangement.

The processing entity 106 is configured to at least process user profile characteristics, sales target characteristics and sales goal data, and assess them according to a decision logic. Additionally, the processing entity 106 may be arranged to further process the comparison data and additionally store it and/or provide graphical representations of it. The processing entity 106 comprises, e.g. at least one processing/controlling unit such as a microprocessor, a digital signal processor (DSP), a digital signal controller (DSC), a micro-controller or programmable logic chip(s), optionally comprising a plurality of co-operating or parallel (sub-)units.

The electronic device 102 comprises also a memory entity 108 for storing at least inputted user profile characteristics, sales target characteristics, sales goal data, comparison data and decision logic. The memory entity 108 may be divided between one or more physical memory chips and/or cards. The memory entity 108 may also comprise necessary code, e.g. in a form of a computer program/application, for enabling the control and operation of the device 100, and provision of the related control data. The memory may comprise e.g. ROM (read only memory) or RAM-type (random access memory) implementations as disk storage or flash storage. The memory may further comprise an advantageously detachable memory card/stick, a floppy disc, an optical disc, such as a CD-ROM, or a fixed/removable hard drive.

Optionally the captured image and video files may be saved to a memory entity external to the device 102 such as a remote server or a cloud computing entity 112, wherefrom they may be accessible and displayable via the device 102 and optionally a number of different devices, such as mobile and desktop devices.

The decision logic essentially comprises at least the rules and/or algorithm for determining the implementable actions in accordance with the comparison of obtained data components. The decision logic may be in the simplest form an algorithm for comparing two or more sets of data with each other, wherein the sets of data may be in a same format or in different formats, such as in code representing the original value.

The electronic device 102 may comprise a receiver, transmitter and/or a transceiver. Connection means 110 may be used to connect the device 102 with the remote entity 112 and other electronic devices 118. The connection means may comprise simplex and/or duplex connections over telecommunications networks, such as wide area networks (WANs) and/or local area networks (LANs).

The connection means 110 may be also used to connect a number of electronic devices 102, 118 at least functionally to each other. The devices 100 may so communicate with or at least transmit to and/or receive information from other similar electronic and/or information and communications technology (ICT) devices.

The optional remote entity 112 such as a cloud computing or remote server, may further comprise a computer program product 114 and/or a database 116. The computer program product 114 may essentially comprise the software to perform the method items of the present invention. Optionally the arrangement may be provided as SaaS, web application, mobile application, facilitated via a browser or similar software, or as an application programming interface (API) wherein the computer program product is external to the at least one electronic device 102 but remotely accessible and usable together with a user interface 104. The database may further comprise instructions, data collected from devices 102 and/or 118 and/or stored performance data. The database may be further used to provide the device 102 with updates and/or system functions.

Optionally the computer program product 114 may be offered as application software to the at least one electronic device 102. Therein it may be run by the electronic device 102 essentially independent of the remote entity 112. Obviously, updates and such may be carried out by connecting to the remote entity 112.

The electronic device 102 may preferably constitute a mobile terminal, such as a smartphone, laptop or desktop computer, or a tablet or a phablet. Optionally, the electronic device 102 may comprise a remote entity such as a cloud computing or remote server.

The electronic devices 118 may comprise mobile terminals, such as a smartphones, laptops or desktop computers, tablets or phablets, or remote entities such as a cloud computing arrangements or remote servers. The devices 118 may be used as sources of performance or benchmark data, or they may constitute other electronic devices utilizing the computer program product 114.

Storing and aggregation of data may be done by using fuzzy logic and machine learning means, such as artificial neural networks techniques.

Further on, determination of implementable at least one sales action may be done, or such information provided, at practically any terminal or server device with suitable UI (user interface). This advantageously allows implementation of the arrangement on (end)-user devices, such as mobile terminals. Even further, said determination process may be divided between suitable devices, such as a server and a mobile device, to allow for different parts of the arrangement and/or method items to be carried out on said different devices. An example of this would be that a server offers data provision (e.g. historic data, data from other devices) for the mobile device to obtain, wherein the determination of implementable at least one sales action is done on the mobile device.

Further the arrangement may utilize 'big data' and crowdsourcing means for gathering data from other devices and/or servers. Further, the arrangement may utilize such means for arranging processing, aggregating and/or provisioning data between the devices and/or servers.

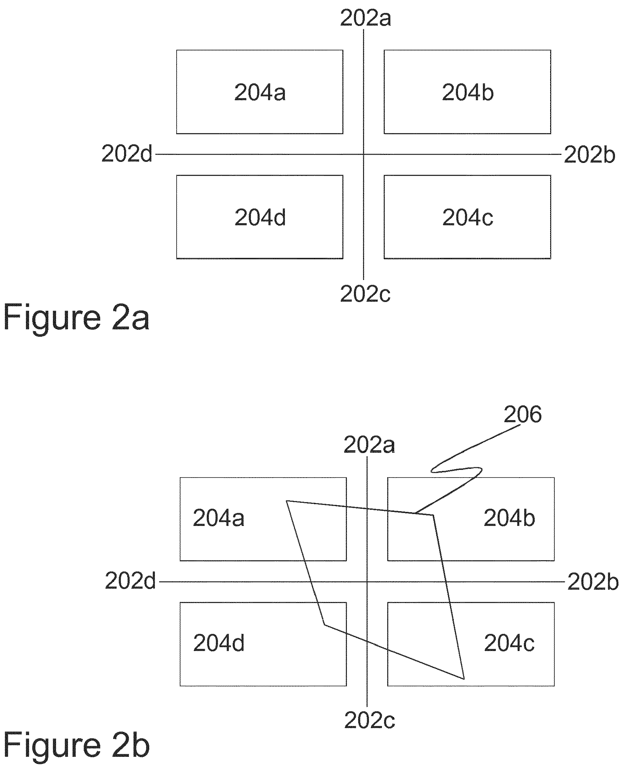

Figures 2a and 2b illustrate in a conceptual manner user profile aspects and user profile creation in accordance with the present invention.

The current arrangement and particularly the user profile aspects may utilize the foundations of personality profiles in psychology for creating the user profiles. Such theories pertaining to personal interaction styles and psychographics are in themselves quite well-established and known. A lot of research has been conducted on the topic "theory of social interaction" by such as Merrill and Bolton. The current arrangement also preferably utilizes psychometrics that are based on many of the established findings and practices in psychology for gathering and analyzing data from users. The means of psychographics and psychometrics are well-known and won't be discussed herein in detail. The arrangement however utilizes both in forming user profiles, sales target profiles and determining implementable sales actions.

The user profiles may be based e.g. on factors: "DRIVER" 204b, "INNOVATOR" 204c, "DIPLOMAT" 204d and "ANALYST" 204a. According to one embodiment 12 adjectives (in the context of psychology commonly referred to as traits) may be used, which measure each of the named factors accordingly (48 in total). The method of measurement may be ipsative or psycholexical measurement in nature. Such measurement comprises, placing three adjectives from each factor in groups and asking a user to pick one that describes them best, one that describes them least and one is left blank - essentially signifying the one in between. There are then 16 clusters of adjectives, each consisting of three adjectives, which three adjectives each represent or pertain to different factors. This kind on "forced" measurement creates data on an ordinal scale. Moreover, it forces to quantify the otherwise qualitative and tacit information.

The factors and corresponding adjectives preferably, but no necessarily, comprise and are divided as:

### DRIVER:

- 1.: Determined
- 2.: Gets down to work
- 3.: Disciplined
- 4.: Self-assured
- 5.: Results-driven
- 6.: Confident
- 7.: Practical
- 8.: An upright citizen
- 9.: Takes responsibility
- 10.: Domineering
- 11.: Has organizational skills
- 12.: Inspires confidence

### INNOVATOR:

- 1.: Inspiring
- 2.: Original
- 3.: Influential
- 4.: Spontaneous
- 5.: Inspiring
- 6.: Innovative
- 7.: Intuitive
- 8.: Creative
- 9.: Full of ideas
- 10.: Capable of coming up with ideas
- 11.: Innovative
- 12.: Creative

### DIPLOMAT

- 1.: Encouraging
- 2.: Supportive
- 3.: Empathic
- 4.: Flexible
- 5.: Full of team spirit
- 6.: Desires co-operation
- 7.: Adaptable
- 8.: Loyal
- 9.: Capable of co-operation
- 10.: Creates solidarity
- 11.: Well-tempered
- 12.: Loyal

### ANALYST

- 1.: Consistent
- 2.: Methodical
- 3.: Logical
- 4.: Punctual
- 5.: Systematic
- 6.: Thorough
- 7.: Careful
- 8.: Thorough
- 9.: Concentrates on the issues at hand
- 10.: Exact
- 11.: Systematic
- 12.: Patient

Such selection and grouping of factors and adjectives is purely exemplary. Moreover, the archetypes may be divided and named differently and they may comprise different adjectives or differently named adjectives from the aforementioned. From the perspective of the present invention the essential point is that any such selection and grouping is done to establish a foundation for determining a user profile and preferably correspondingly to the personality/sales types established in psychology and adjacent sciences. Of course, for a usable arrangement such profiles should at least somehow describe the user's personality or selling type. Therefore user profile based on such factors and adjectives should be at least such that a user may be provided with at least a number of implementable sales actions and/or a number of criteria, optionally a number of adjectives, for user-based self-assessment.

For example, in figure 2a the factors "DRIVER" 204b, "INNOVATOR" 204c, "DIPLOMAT" 204d and "ANALYST" 204a are divided on the axels of substantiality (focus on the discussed issues/subject matter) 202a, dominance (tendency to lead and dominate) 202b, people-centicity (focus on empathizing and soft values) 202c, and adaptability (capability to improvise) 202d. These axles again are not mandatory but are used to explain of how the different factors and hence user profiles work and compare to each other.

The factors are used to form the actual user profile of a user. The arrangement asks the user for input on a predetermined set of factors and adjectives via measurement as mentioned hereinbefore. Scoring of such input may be then carried out in following manner: 2 points for "describes best", 1 point for "blank" / in between and 0 points for describes least. Hence, the total score is 48, which is distributed across four main factors. The end result is always the same (48 in total): consequently, each of the four factors involved get a value ranging from 0-24. "Points per factor" define the point or measure of each factor wherefrom the user profile is reasoned or deducted accordingly. The user profiles may be converted into one of fifteen categorical profiles as follows:
1. Driver type
2. Innovator type
3. Diplomat type
4. Analyst type
5. Driver-Innovator type
6. Driver-Diplomat type
7. Driver-Analyst type
8. Innovator-Diplomat
9. Innovator-Analyst
10. Diplomat-Analyst
11. Lack of Driver
12. Lack of Innovator
13. Lack of Diplomat
14. Lack of Analyst
15. Even square (all four values the same).

Obviously, the profiles may be named differently but herein some are presented for simplicity and in an exemplary manner to pertain to the factors and adjectives presented hereinbefore. Herein the combined types have high amount of variables from the combined categorical profile traits.

Also, of course any other scoring than 2, 1, 0 may also be used, preferably however preserving at least a similar relationship between the values.

After scoring, each profile is rounded up to the nearest categorical profile. There are 15 categorical profiles altogether. There is an option of inter-rater input as well. In other words other people can provide input concerning the person in question / focus - evaluating the very same adjectives only the focus in mind. However, the rounded up categorical profile essentially form the user profile. In other words, the change is from trait (adjective) psychology to type psychology. Instead of presenting and displaying profiles on a continuum, for instance, all close enough "DRIVER types" will be categorized as DRIVERs.

The line 206 of figure 2b depicts the point distribution of a user's input in an exemplary manner. In the expressed case of figure 2b, the user profile would constitute an "innovator-analyst" (as the factors of innovator 204c and analyst 204a are dominant, i.e. have the most points overall).

An example of the input requirements presented to a user via a user interface could comprise:
- "A list of adjectives describing social interaction styles or work methods, which have been put into groups of three, is listed below."
- "Select the adjectives from the groups of three that describe you the most and the least. Mark the adjective that describes you the least with a minus sign (-) and the one that best describes you with a plus sign (+). One adjective from each group should be left unmarked. Always select one minus and one plus from each group, even if none of the adjectives provided seems to describe you particularly well or poorly."

The user profile may be also acquired later from the memory, such as when already once created or otherwise identified by a user. Further on, user profile data and other user profile related data may be obtained from other electronic devices or remote entities. Such data may be particularly useful when e.g. another user has the same user profile as another user. Even in such situations the user profiles do not preferably individualize any user but are instead essentially anonymous, such that their actual user cannot be identified at least by another user although in some cases the users may be identifiable by an admin user, service provider, manager, or other such party with authorization.

Further on, the sales profile may be chosen otherwise, such as from a list, by the user and needn't comprise such measurement and determination from user selected adjectives. Again, the measurement type presented herein is presented only for simplicity and to give an example of the underlying categorical selling/personality profiles that constitute the user profile. Hence, it is obvious that the arrangement may obtain the user profile data in accordance with user input by selecting a profile from a list, by retrieving a previously or otherwise created user profile from a memory or via user selected adjectives or such pertaining to categorical user profiles from which the user profile is determined.

A sales target profile may also be created by the user in accordance with the user's perception of the sales target. In other words, the arrangement needn't necessarily use or store any actual sales target data, such as being determined by similar means as user profile, but it may simulate the sales target profile in accordance with user input. Optionally such sales target information may be predetermined and stored in the memory or database and retrieved for use when needed. This allows for creating and storing different user-created sales target profiles which may be individualized or anonymous, i.e. "archetype profiles", or as with user profiles "categorical profiles", representing a certain personality type or customer/buyer type. Such sales target profiles may be similar to that of the categorical profiles or they may comprise other profiles such as based on a more crude set of adjectives. The sales target may hence be created also with the same means as the user profile, and preferably in accordance with user input.

There is necessarily no individual recognition of the user and the arrangement may work essentially agnostic of the actual user as well as the sales targets. The same considerations apply also for the sales targets.

The user profile and the sales target may however be compared to each other and implementable sales actions based on said comparison may be determined. For example, knowing the user profile and its traits (adjectives), and knowing the same information of the sales target, comparison may be based on to find the mutual factors between the two or by mapping out the factors to the user so that he or she understands how to approach the sales target in accordance with the user's type (user profile) and the sales target's type (sales target profile).

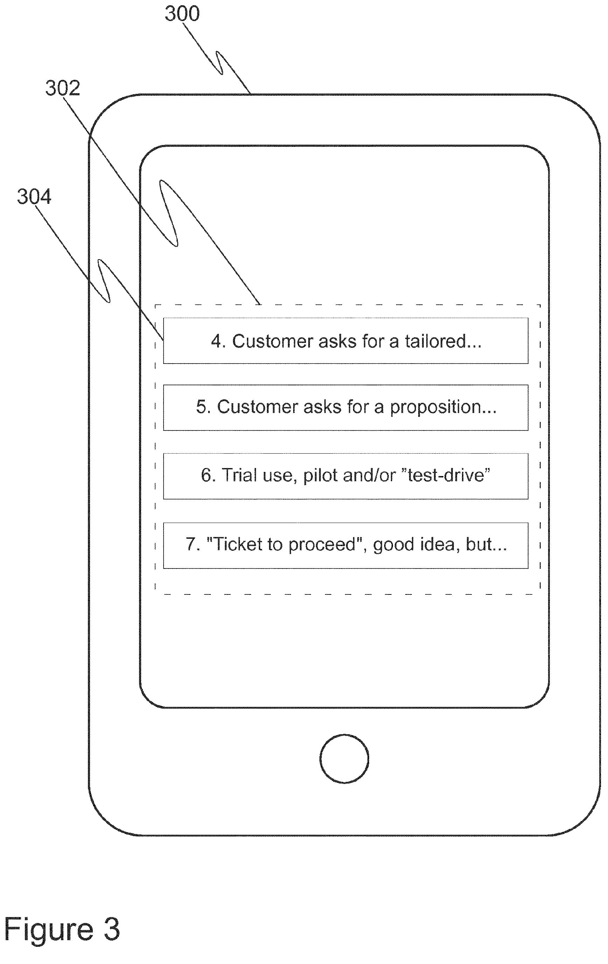

Figure 3, illustrates an exemplary functionality for obtaining sales goal data on a mobile device 300 setting. Preferably the sales goal data is obtained via user input engendered on the graphical user interface indications representing different goals 304. Optionally, sales goal data may be obtained via different user input, such as voice input. Optionally, the sales goal data may be obtained from the arrangement memory.

The goal of the sales event "sales goal" is also obtained before the meeting. The sales target goal is preferably obtained from the user according to user input. The sales goals may comprise a list 302 in the order of best to the lowest result e.g. The sales goals may comprise or be constituted in accordance with list items of:
1. Buys/purchases and becomes an evangelist
2. Closing, signs contact and/or accepts the terms orally
3. Conditional closing: "I we were to create this feature X within 3 months and it functions appropriately, you will buy it for sum of Y?" => "Yes"
4. Customer asks for a tailored, one-off offer, tender and/or proposition
5. Customer asks for a proposition (offering against competition)
6. Trial use, pilot and/or "test-drive"
7. "Ticket to proceed", good idea, but the notion and/or solution will be challenged
8. Request for further information: customer is willing to provide info and do ground work
9. New meeting set up: at least partially different (more appropriate) participants
10. New meeting set up: same participants
11. Customer promised to "spearhead" the cause and/or take it up in an internal meeting
12. Further information will be provided by seller (agreed upon meeting date)
13. Further information will be provided by seller (customer will get in touch again)
14. Seller suggests that he/she will send a formal tender and/or proposition
15. Further information will be provided by seller (seller will get in touch again)
16. "Let's get in touch again/Let's open up negotiations at a more convenient time"
17. Does not buy the general idea and/or approach - no concrete next step.

The goals may not be the same as the explicitly presented ones. Further, they may be chosen in accordance with preferred system parameters or business context: goals and outcomes may vary from one business to another. Essentially, the arrangement comprises systematic goals (from the user's perspective) that are reliable and comparable, being essentially the same or comparable in accordance with some logic, over time. Obviously, they needn't be in any particular order. Further, they are preferably listed in the order of best to worst but may be listed in any order. Even further, they may comprise text such as described hereinbefore or they may be numeric or alphanumeric, such as to pertain to certain scoring of the estimated e.g. success of the sales event.

Essentially always however, the sales goals should be stated essentially on a scale, such as the one presented hereinbefore, for the arrangement to quantify and accrue comparable data over time.

Further, although not explicitly depicted herein, the arrangement may also inquire about the mental state of the user, preferably before the meeting before or after obtaining sales goal data. These factors may be stored and used for assessing what needs to especially be considered or what were the implementable sales actions or results of a meeting the last time the user had similar mental state. Such mental state characteristics may comprise alertness, i.e. whether the user is exhausted or energetic, perception about the sales target and the meeting, i.e. how well the user thinks the meeting is going to go, and general feeling of the user, is the user stressed, does the user feel accomplished, affirmed, confident, etc. Further, the user may be inquired whether they are going alone or with another person.

After the sales event the user may be inquired sales goal success data essentially with the same means as the initial sales goal. The discrepancy between set upon meeting goals and actual meeting outcomes defines relative success and failure. As an example there are 17 outcomes listed hereinbefore. If a user chose 10. "New meeting set up: same participants" as his meeting specific goal and the outcome sales goal success data is 4. "Customer asks for a tailored, one-off offer, tender and/or proposition", it is safe to say that he has really performed better than expected. Should he only get a modest response of 16. " Let's get in touch again/Let's open up negotiations at a more convenient time", it is clear that seller thing is not a major priority at least at the moment indicating a poor success of the user in the sales event.

As is clear from the previous considerations the mobile device 300 implemented list 302 products 304 visualized via graphical indications and constituting the selectable sales goals may be advantageously produced via a mobile device 300 user interface, such as a touchscreen, and selected by user input such as pointing or swiping over the graphical indications pertaining to the products 304. The list itself may be scrolled, panned, etc. to adapt make the products 304 visible via the screen. The same considerations apply for obtaining sales target success data.

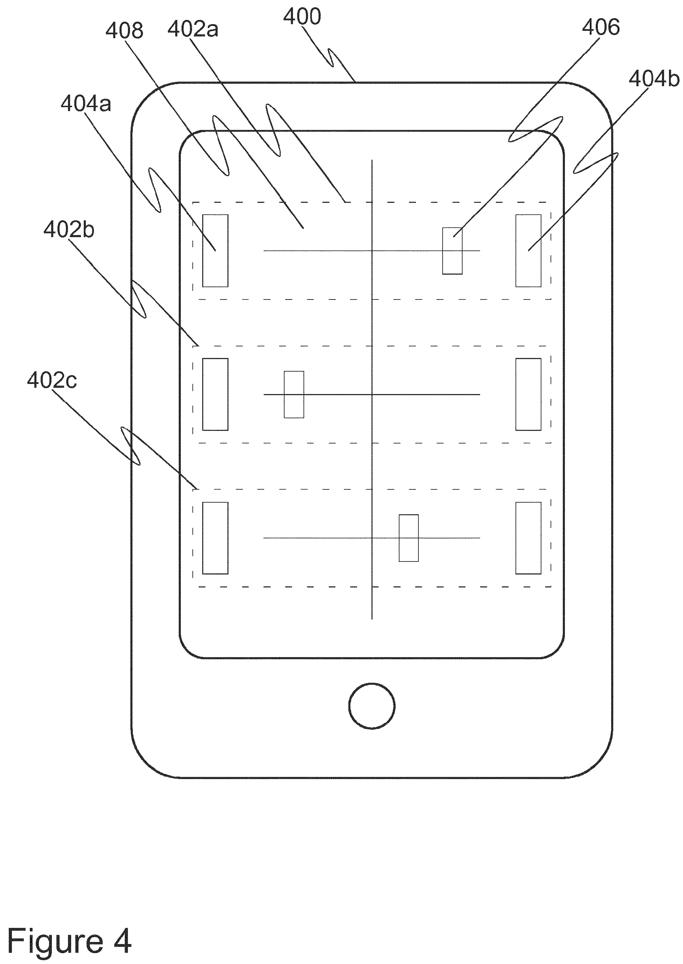

Figure 4 illustrates in a conceptual manner an exemplary user interface implementation for collecting self-assessment data in accordance with the present invention.

For example, when the user profiles are divided into 15 different types, each one of them have their set of development areas of crucial actions, which are likely to play a major role in regards to defining customer contact success and failure. The self-assessment is essentially based on the traits associated with the particular user profile. For example for a Driver-Innovator type, the following variables (based on the actual categorical traits) may be displayed for obtaining self-assessment data, wherein the ends pertain to the opposite extremes of the trait:
1.I went with the flow - I prepared myself thoroughly in advance
2.I talked a lot - I asked a lot and listened patiently
3.I "winged it" - I listened till the end and kept a little pause
4.I proceeded based on my preconceptions - I gave room for new and innovative approaches and initiatives
5. I made assumptions and generalizations - I made a concentrated effort to understand customers situation
6. I drove my point of view rigorously - I was receptive and amenable to my counterpart's arguments
7. I tried to force through closing of the sale - I gave room for my customer to buy into the notion of buying
8. I left the meeting into the state that it finished - I made an effort finish with a positive tone/after thought.

On a mobile device for example, these variables 402a, 402b, 402c may be shown on scales 408 wherein the user may engender his or hers input by e.g. swiping a slide knob or such graphical representation of the variable value 406 on the scale 408. Additionally, the ends may be marked with indications 404a, 404b for representing the extremes of the variable, such as "I went with the flow - I prepared myself thoroughly in advance".

Obviously, again the variables may be chosen in accordance with the user profile types and may comprise more or less variables.

The scale may be for example essentially of 0-1000.

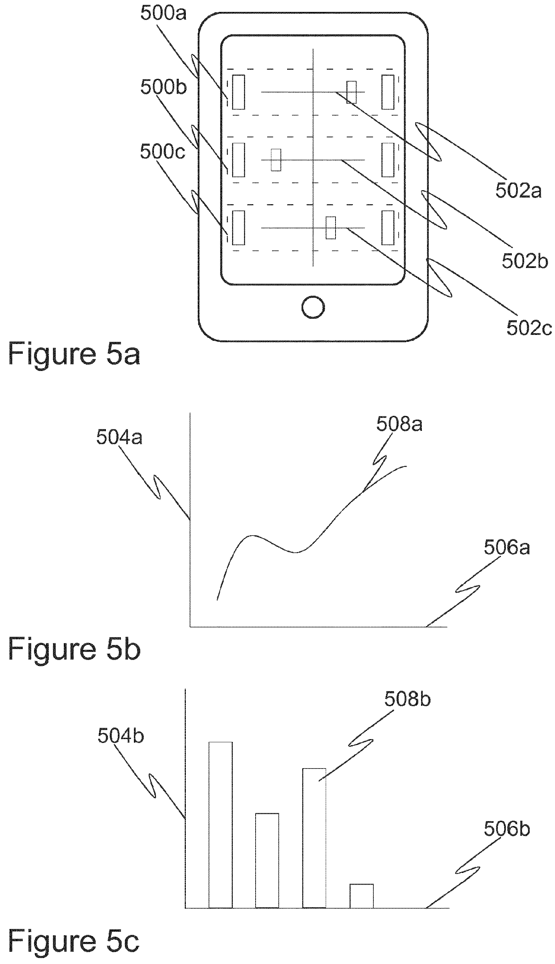

Figures 5a, 5b and 5c illustrate presentations of implementable sales actions and graphical representations of user performance via an interface mockup setting. Such settings may be utilized via a digital (web or application) dashboard.

Figure 5a illustrates a similar presentation of implementable sales actions as presented in figure 4 for inputting self-assessment data. For example, the user profile traits wherein a lot or most improvement is needed may be presented as different indications 500a, 500b, 500c with each of them showing the corresponding value of how much the user should act on that. The values may be shown e.g. on individual scales 502a, 502b, 502c, with numeric, alphanumeric or symbolic scales or scoring. Hence, the location of the slide in these examples identify the areas to which the user should concentrate on and to what extent; i.e. what the user should do more and what the user should to less to achieve a better result for the sales event and/or to reach a particular sales goal.

In some instances the sales actions may include also implementable sales actions, such as phrases, sales/persuasion techniques (expert, foot-in-the-door technique, one-shot, scarcity technique, face-in-the-door, give & take, tit-for-tat, bonding, conviction, superhero, networking, references, sustainability, fear of missing out, total cost of ownership, etc.), use of metaphors, use of certain technology, use of certain historic or future data or projections of income or reduction in costs, use of evidence, use of marketing material. Most of such techniques are known from the prior art and hence won't be discussed further. However, the use of such techniques is rarely well-placed and justified, which is overcome with the present invention.

The implementable sales actions may comprise also textual advice, such advice based on the traits, such as "go with the flow" (instead of focus on preparation), remember to listen (instead of talking too much or being absent), "give the client concrete evidence of the cost benefits if this project is executed". Even further, these aspects may be presented with the different indications 500a, 500b, 500c with corresponding values to express how much emphasis should be given on each.

For example, when a user constantly fails in some areas in accordance with his or hers self-assessment and sales goal success data, the arrangement identifies and presents the biggest discrepancies as is discussed hereinafter. The user may then actively and consciously focus on improving these discrepancies, overall or in relation to a sales goal.

Figure 5b illustrates a graphic presentation of a user performance development, such as the sales goal success or improved following of implementable sales actions over time or in relation to sales events. Herein, the axle 506a represent for example the cumulative amount of time or sales events, the axle 504a the performance, such as the performance of any user profile trait, sales goal success, etc. and the 508a represents a path of user development. The tracked user profile trait or traits 504a could be chosen from the user's most important traits, such as the ones wherein he or she constantly performs poorer or otherwise determined traits.

Figure 5c illustrates another kind of graphical representation for representing the performance development of a user profile trait, traits or sales goal success 504b over time 506b. The representation may be also arranged to comprise the type of trait on the axle 506b, the performance or development on axle 504b, where then the individual columns 508b show the development of different performance traits or sales goal success of a user or users.

The arrangement may of course utilize other numeric, alphabetic, alphanumeric and graphical representations as well. The representations may be used to graphically represent the development of performance or the implementable sales actions. Further, although not explicitly depicted, the implementable sales actions may be presented to the user as descriptive rules or advice. For example, in addition, or instead, of presenting a user with values on scales of different improvable user profile traits, the same may be described to the user as examples of how to be better at the particular trait or what it means to "do more" or "do less" of it so that the user has a concrete image of not only what to do, but also, how to do it.

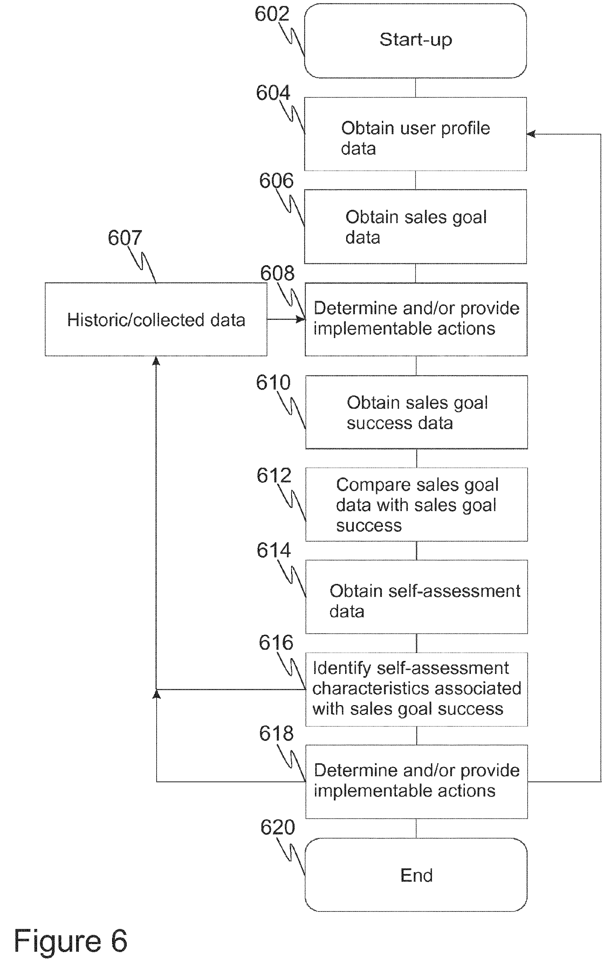

Fig. 6 is a flow diagram illustrating one feasible embodiment of a method in accordance with the present invention.

At 602, referring to the initial state of the method the arrangement performing the method is configured. The configuration comprises at least determining the comparison data and decision logic.

The configurations, including the decision logic may be also retrieved and/or updated for example from and/or according to database on an external device or entity, such as a cloud computing entity.

At 604, user profile data is obtained via graphical user interface, from a memory or external database, in accordance with user input.

At 606, sales goal data is obtained via graphical user interface, from a memory or external database, in accordance with user input.

The method item 607 represent a resource component that may be used herein to provide a user with previous data or recommendations in accordance with previous user profile, performance data, sales goal, sales goal success and/or self-assessment user input data.

At 608, the method may provide implementable sales actions in accordance with the acquired data components. Herein, the data components are compared according to a predetermined decision logic, wherefrom the implementable actions may be determined in accordance with said comparison and provided for a user. This method item may be e.g. carried out essentially before a sales event to provide user with actions he or she can implement in the sales event.

The implementable sales actions may be created by using the previously acquired performance data, sales goal, sales goal success and/or self-assessment user input data, identifying the currently set sales goal and providing user with the user profile traits and/or other optional parameters that have previously been associated with the success or failure in reaching such set goal.

One way to determine the implementable sales actions is as follows. The arrangement may sort out the data associated with success and data associated with failure. Then it determines the biggest factor affecting to the failure of reaching set goal, which is herein referred to as factor X. The arrangement then determines the biggest factor affecting to the success of reaching set goal, which is herein referred to as factor Y. Then, the arrangement determines the two most significant, in terms of magnitude or statistical significance, factors from the rest of the factors (so excluding factors X and Y). These two other factors are herein referred to as Z and Q. The final advise and implementable sales actions are then presented using or on the basis of the X, Y, Z ja Q factors. They may be for example presented in accordance with their retrieved magnitudes and with the information of whether they contributed to failure or success of reaching a sales goal. This gives the user quantified information of which traits to emphasize and focus on for the sales event to be successful.

At 610, which essentially is carried out after a sales event, the sales goal success is inquired and obtained from the user.

At 612, the comparison between the set sales goal and sales goal success is done. The comparison may be firstly divided into two groups: success and failure. Success pertains to sales goal success being greater than or equal to the set sales goal whereas failure pertains to sales goal success being less than the set sales goal.

The rate of success and failure may further be determined by how much greater or smaller the sales goal success is in relation to the set sales goal. E.g. referring to the hereinpreviously presented list of sales goals: having a sales goal success of 3. I "winged it" - I listened till the end and kept a little pause while the set sales goal is 5. I made assumptions and generalizations - I made a concentrated effort to understand customer's situation would be success of a greater magnitude then if the sales goal success were 4. I proceeded based on my preconceptions - I gave room for new and innovative approaches and initiatives. In other words they could be rated with corresponding or relative magnitudes of success (or failure) of +1, +2, +3, (-1, -2, -3) and so on.

The method item 612 may be carried out essentially simultaneously with the method step of 614 or before or after it.

At 614, the self-assessment data is obtained from the user. The user inputs his or her subjective opinion on how he or she performed in the sales event in accordance with the provided user profile related traits.

At 616, the self-assessment characteristics are associated with the result of the comparison, and the data is then stored as aggregated performance data to be used in the method item of 607. In other words, the self-assessment is associated with the result of the comparison between sales goal and sales goal success. Further, this way the user inputted self-assessment parameters may not only be associated with success or failure but also the magnitude of success or failure as depicted hereinbefore.

At 618, the implementable sales actions are determined and/or provided for a user in accordance with the comparison, sales goal success and/or user's self-assessment data of a sales event.

The method may also comprise obtaining and aggregating at least one other information component from the group consisting of sales records, historical comparison data, performance data, goal success data and user's self-assessment data. Such data may be also used in determining and/or providing implementable actions and/or graphical representations.

Herein the obtained and/or processed data may also be stored and/or provided as the method item resource 607. For example, an amount of biggest discrepancies, e.g. as four of them, and are stored to be displayed as a "before meeting output" or a tip concerning meeting to come. There will, however, be one positive and one negative discrepancy and two of the biggest differences as follows. Herein, the discrepancies refer to biggest differences in self-assessment characteristics concerning the user's own conduct during the sales event. The purpose of such information is to clarify, what kind of changes in the user's own conduct have been associated with over and under performance in regards to sales goal-sales goal success ratio.

Further, regression and covariate techniques may be used for aggregating and utilizing (e.g. comparing) previous data, such as collected sales goal success, self-assessment and/or performance (development) data.

The method may also incorporate the aspects of gamification. Further on, the arrangement may incorporate incentives such as that by improving closing rate or reaching to the set target goals or implementing successfully the suggested implementable sales actions may be used for measures or indication for providing incentives. For example, reaching the set goal or implementing the suggested actions may provide a positive incentive, and outperforming them may provide an even bigger incentive, such as a percentage per set goal.

At 620, referred to as the end phase, the user terminates the method and the method ends. Optionally the arrangement may be configured to terminate the successive image function.

In a way the arrangement and method create a model of the user's personality and sales type, and aggregate user inputted data over time, which may then be benchmarked with previously acquired user input data to obtain performance development data and implementable sales actions.

Method items may be executed by a computer program product embodied in a non-transitory carrier medium, such as optical disc or memory card.

The scope of the invention is determined by the attached claims together with the equivalents thereof. The skilled persons will again appreciate the fact that the disclosed embodiments were constructed for illustrative purposes only, and the innovative fulcrum reviewed herein will cover further embodiments, embodiment combinations, variations and equivalents that better suit each particular use case of the invention.

## Claims

1. An electronic arrangement for determining at least one implementable sales action for a user comprising:
- at least one electronic device comprising a processing entity and a memory entity or an access to a memory entity for processing and storing data, respectively, said processing entity being configured to at least:
- obtain user profile data, in accordance with user input or from the memory entity,
- obtain sales goal data, in accordance with user input or from the memory entity,
- obtain sales goal success data in accordance with user input,
- obtain user profile associated self-assessment data in accordance with user input,
- compare the sales goal and the sales goal success data, and determine the result of the comparison,
- identify self-assessment characteristics associated with the result of the comparison, and store the data as performance data,
- in accordance with a predetermined decision logic, determine implementable actions in accordance with a sales goal and to the stored performance data.

2. The electronic arrangement according to any preceding claim, wherein the processing entity is configured also to obtain sales target profile data, in accordance with user input or from the memory entity.

3. The electronic arrangement according to any preceding claim, wherein the electronic arrangement comprises also at least one remote entity, optionally a remote server or a cloud computing system, comprising at least a database for storing information from electronic devices and/or the decision logic data.

4. The electronic arrangement according to any preceding claim, wherein the electronic arrangement comprises connection means for transmitting information towards and/or receiving information from a remote entity, such as a cloud server or big data database server.

5. The electronic arrangement according to any preceding claim, utilizing means, optionally 'big data' or fuzzy logic means, for obtaining, aggregating, processing and/or provisioning the data gathered from the electronic devices.

6. A method for determining implementable sales actions for a user comprising:
- obtaining user profile data and determining a user profile,
- obtaining sales goal data,
- comparing the obtained data components according to a predetermined decision logic, and
- determining and providing a user with implementable actions in accordance with said comparison.

7. The method according to claim 6, comprising the method item of obtaining sales goal success data.

8. The method according to any of claims 6-8, comprising the method item of obtaining sales target profile data.

9. The method according to any of claims 6-9, comprising the method item of determining a sales target profile.

10. The method according to any of claims 6-10, comprising the method item of obtaining the user's self-assessment data of a sales event.

11. The method according to any of claims 6-11, comprising the method item of obtaining at least one other previously collected data component from the group consisting of user profile, sales goal, sales goal success and/or self-assessment user input data.

12. The method according to any of claims 6-12, comprising the method item of obtaining user profile data, sales goal data and previous user input data or recommendations, comparing the obtained data components according to a predetermined decision logic, and determining and providing a user with implementable actions according to said comparison.

13. The method according to any of claims 6-13, comprising the method item of determining and providing a user with implementable actions according to said comparison, sales goal success data and user's self-assessment data of a sales event.

14. The method according to any of claims 6-14, comprising the method item of obtaining and aggregating at least one other data component from the group consisting of sales records, historical comparison data, goal success data and/or user's self-assessment data.

15. A computer program product embodied in a non-transitory computer readable carrier or distribution medium, comprising computer code that, when run on a computer, cause the computer to execute the method items of claim 6.
